(19) Europäisches Patentamt
European Patent Office
Office européen des brevets

(11) **EP 3 672 094 A1**

(12) **EUROPEAN PATENT APPLICATION**
published in accordance with Art. 153(4) EPC

(43) Date of publication:
**24.06.2020 Bulletin 2020/26**

(51) Int Cl.:
**H04B 7/04** *(2017.01)* **H04L 1/06** *(2006.01)*
**H04B 17/391** *(2015.01)*

(21) Application number: **18846785.6**

(22) Date of filing: **16.08.2018**

(86) International application number:
**PCT/CN2018/100759**

(87) International publication number:
**WO 2019/034098 (21.02.2019 Gazette 2019/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.08.2017 CN 201710701526**

(71) Applicant: **ZTE Corporation**
**Shenzhen, Guangdong 518057 (CN)**

(72) Inventors:
• **WANG, Zhigang**
  **Shenzhen**
  **Guangdong 518057 (CN)**
• **ZHONG, Kunjing**
  **Shenzhen**
  **Guangdong 518057 (CN)**
• **GUO, Lin**
  **Shenzhen**
  **Guangdong 518057 (CN)**

(74) Representative: **Blumbach · Zinngrebe**
**Patentanwälte PartG mbB**
**Alexandrastraße 5**
**65187 Wiesbaden (DE)**

(54) **CHANNEL ANALYSIS MODEL OF MIMO SYSTEM, CHANNEL MODELING METHOD OF MIMO SYSTEM, AND COMPUTER READABLE STORAGE MEDIUM**

(57)     A channel analysis model of MIMO system, a channel modeling method of MIMO system, and a computer-readable storage medium are provided. The channel analysis model of MIMO system includes an antenna component and an analysis component, the antenna component includes a transmitting antenna array containing a plurality of transmitting antenna elements and a receiving antenna array containing a plurality of receiving antenna elements, and the analysis component is configured to establish a channel model of MIMO system according to a correlation between the transmitting antenna elements, a correlation between the receiving antenna elements and a channel matrix between the transmitting antenna array and the receiving antenna array.

transmitting a radio signal — 401

receiving the radio signal — 402

establishing a channel model of MIMO system according to a correlation between the transmitting antenna elements, a correlation between the receiving antenna elements, and a channel matrix between the transmitting antenna array and the receiving antenna array — 403

FIG. 4

EP 3 672 094 A1

## Description

## CROSS-REFERENCE TO RELATED APPLICATIONS

The present application claims priority of Chinese patent application No.201710701526.6 entitled "MIMO channel analysis model, MIMO channel modeling method, and computer-readable storage medium" filed on August, 16, 2017, the contents of which are incorporated herein by reference in their entirety.

## TECHNICAL FIELD

The present disclosure relates to, but not limited to, the field of communication technologies, and in particular, to a channel analysis model of MIMO system, a channel modeling method of MIMO system, and a computer-readable storage medium.

## BACKGROUND

A modern communication system relies on multiple antennas at a transmitter and/or a receiver to enhance link performance. Such technique is referred to as Multiple-Input Multiple-Output (MIMO) technique, which exploits spatial dimensions by employing spatial encoding and/or spatial decoding. Large-scale MIMO technology, which is an important research and development direction of current communication system, is one of technologies of great interest in 5G wireless communication system, and it is expected to achieve high performance gain that provides ability to accommodate many users with high data rate and good reliability while consuming less power. Large-scale MIMO system uses a large number of antennas at a base station side, and reduces power in a certain channel by focusing energy to a target mobile user through using pre-coding technique, i.e., by directing wireless energy to a particular user, to reduce power in the certain channel while reducing interference to other users.

Channel modeling of large-scale MIMO system has important significance for designing large-scale MIMO system, and meanwhile, an improvement of coincidence degree of a channel model of large-scale MIMO system and an actual channel of large-scale MIMO system is very important for improving performance of large-scale MIMO system.

## SUMMARY

The present disclosure provides a channel analysis model of MIMO system, which includes an antenna component and an analysis component, the antenna component includes a transmitting antenna array containing a plurality of transmitting antenna elements and a receiving antenna array containing a plurality of receiving antenna elements, and the analysis component is configured to establish a channel model of MIMO system according to a correlation between the transmitting antenna elements, a correlation between the receiving antenna elements, and a channel matrix between the transmitting antenna array and the receiving antenna array.

The present disclosure provides a channel modeling method of MIMO system, which employs the channel analysis model of MIMO system as described above, including: establishing the channel model of MIMO system according to the correlation between the transmitting antenna elements in the transmitting antenna array of the channel analysis model of MIMO system, the correlation between the receiving antenna elements in the receiving antenna array of the channel analysis model of MIMO system, and the channel matrix between the transmitting antenna array of the channel analysis model of MIMO system and the receiving antenna array of the channel analysis model of MIMO system.

The present disclosure provides a computer-readable storage medium storing a computer program which, when executed by a processor, cause the processor to implement the channel modeling method of MIMO system as described above.

## BRIEF DESCRIPTION OF THE DRAWINGS

Fig. 1 is a schematic diagram of a channel analysis model of MIMO system according to an embodiment of the present disclosure;
Fig. 2 is a schematic diagram illustrating a staggered arrangement of any two adjacent columns of antenna elements in an embodiment of the present disclosure;
Fig. 3 is a schematic diagram of an antenna array model of MIMO system established by HFSS software in an embodiment of the present disclosure; and
Fig. 4 is a flowchart of a channel modeling method of MIMO system according to an embodiment of the present disclosure.

## DETAILED DESCRIPTION

Technical solutions of embodiments of the present disclosure will be described below clearly and completely with reference to accompanying drawings, and it is to be understood that described embodiments are only some embodiments of the present disclosure, but not all embodiments. All other embodiments, which may be derived by a person skilled in the art from the described embodiments of the present disclosure without inventive step, are within the scope of the present disclosure.

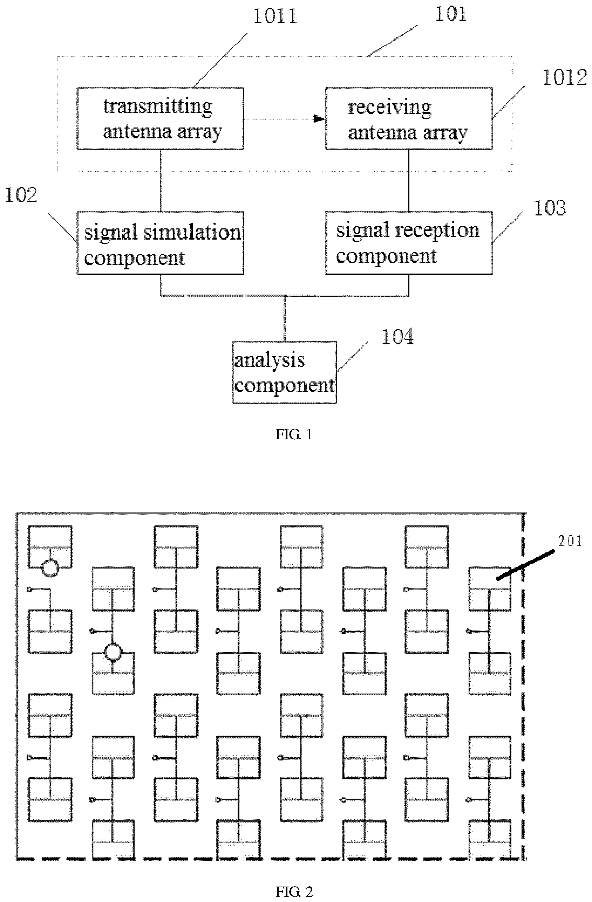

Fig. 1 shows a schematic diagram of a channel analysis model of MIMO system according to an embodiment of the present disclosure. As shown in Fig. 1, the channel analysis model of MIMO system includes an antenna component 101, a signal simulation component 102, a signal reception component 103, and an analysis component 104. The antenna component 101 includes a transmitting antenna array 1011 containing a plurality of transmitting antenna elements and a receiving antenna array 1012 containing a plurality of receiving antenna elements. The signal simulation component 102 is configured to transmit radio signals through the transmitting antenna array 1011. The signal reception component 103 is configured to receive radio signals through the receiving antenna array 1012. The analysis component 104 is configured to establish a channel model of MIMO system based on a correlation between the transmitting antenna elements, a correlation between the receiving antenna elements, and a channel matrix between the transmitting antenna array 1011 and the receiving antenna array 1012.

In the embodiment of the present disclosure, the correlation between the radio signals introduced by the transmitting antenna array and the receiving antenna array and the correlation between the radio signals during free spatial propagation are considered to establish the channel model of MIMO system, and the obtained channel model of MIMO system conforms to an actual channel condition of large-scale MIMO system well. The channel model of MIMO system established by using the channel analysis model of MIMO system according to the embodiment of the present disclosure enables designing the transmitting antenna array and the receiving antenna array of MIMO system based on propagation characteristics of radio signals within the transmitting antenna array of MIMO system, a space, and the receiving antenna array of MIMO system. For example, an arrangement of the transmitting antenna elements in the transmitting antenna array of MIMO system and an arrangement of the receiving antenna elements in the receiving antenna array of MIMO system may be adjusted as needed to optimize a design of MIMO system, so as to improve a performance of MIMO system.

In the embodiment of the present disclosure, the correlation between the transmitting antenna elements and the correlation between the receiving antenna elements are related to at least one of: a coupling degree between the transmitting antenna elements, a coupling degree between the receiving antenna elements, a standing wave coefficient of the transmitting antenna elements, a standing wave coefficient of the receiving antenna elements, a radiation characteristic between the transmitting antenna elements, a radiation characteristic between the receiving antenna elements, an isolation between the transmitting antenna elements, an isolation between the receiving antenna elements, a port transmission condition of the transmitting antenna elements, a port reflection condition of the receiving antenna elements, a return loss between the transmitting antenna elements, a return loss between the receiving antenna elements, and the like.

Practical experiments prove that, the channel model of MIMO system established by considering the correlation between the receiving antenna elements and the correlation between the transmitting antenna elements, compared with the channel model of MIMO system established by not considering the correlation between the receiving antenna elements and the correlation between the transmitting antenna elements, has obvious differences in propagation characteristics of radio signals, while in an actual MIMO system, the correlation between the transmitting antenna elements and the correlation between the receiving antenna elements exist, and by considering these correlations to establish the channel model of MIMO system, a similarity degree between propagation characteristics of the radio signals in the channel model of MIMO system and propagation characteristics of actual radio signals may be improved.

In the embodiment of the present disclosure, the correlation between the receiving antenna elements may include a matrix $T_r$ between input vectors and output vectors of the receiving antenna array, the correlation between the transmitting antenna elements may include a matrix $T_e$ between input vectors and output vectors of the transmitting antenna array, and the channel model of MIMO system may be expressed by $H'_p = T_r H_p T_e$, where $H_p$ represents a downlink physical channel matrix associated with p$^{th}$ path from the transmitting antenna array to the receiving antenna array.

In the embodiment of the present disclosure, $H_p$ may be calculated by

$$H_p = a_p e^{-j2\pi d_p / \lambda_c} e_r(\theta_p) e_t^H(\varphi_p),$$ where $a_p$ represents an attenuation factor of the p$^{th}$ path, $d_p$ represents a distance between the transmitting antenna element and the receiving antenna element in the p$^{th}$ path, $\lambda_c$ represents a wavelength of a carrier wave, $e_r(\theta_p)$ represents a receiving antenna array response vector corresponding to an arrival angle $\theta_p$ of a radio signal reaching the receiving antenna array, which satisfies $\|e_r(\theta_p)\|_2$ =1, and $e_t^H(\varphi_p)$ represents a transmitting antenna array response vector corresponding to a departure angle $\varphi_p$ of a radio signal transmitted by the transmitting antenna array, which satisfies $\left\| e_t^H(\varphi_p) \right\|_2 = 1$.

As an example, MATLAB (Matrix Laboratory) software or HFSS (High Frequency Structure Simulator) three-dimensional electromagnetic field simulation software of Ansoft company may be used to simulate an antenna array of the channel analysis model of MIMO system to obtain radiation characteristics of the transmitting antenna array, radiation characteristics of the receiving antenna array, a coupling degree between the transmitting antenna elements, and/or a coupling between the receiving antenna elements.

In the embodiment of the present disclosure, the antenna component of the channel analysis model of MIMO system may further include a PCB (printed circuit board), where the transmitting antenna elements and the receiving antenna elements are patch antenna elements, and the patch antenna elements are disposed on the PCB and arranged in order.

In the embodiment of the present disclosure, the antenna component is arranged on the PCB, resulting in a low cost and a small size, and is easy to be installed and used, and meanwhile, antenna elements can be effectively installed and arrangement positions of the antenna elements can be fixed effectively.

In the embodiment of the present disclosure, the antenna component may further include a signal transceiver sub-component, and the signal simulation component may include an excitation signal generating element, where the excitation signal generating element is configured to feed power to the transmitting antenna array on the PCB , for example, via a coaxial wire interface, so that excitation signals connected to the transmitting antenna elements in the transmitting antenna array are independent of each other.

In the embodiment of the present disclosure, the excitation signal generating element feeds power to the transmitting antenna array through a back surface of the PCB by using the signal transceiver (TR) sub-component of the antenna component. Through an operation of feeding, the transmitting antenna array obtains an input signal and then generates a radio signal to radiate to a space outside the transmitting antenna array.

When input signals are transmitted among the transmitting antenna elements of the transmitting antenna array, a certain coupling may be generated, so that the input signals have a certain correlation. In the embodiment of the present disclosure, for establishing the channel model of MIMO system, the correlation of the input signals propagating between the transmitting antenna elements is considered to optimize the channel model of MIMO system, facilitating to an accurate analysis and test for channels of MIMO system, and therefore enabling an optimization of a design of MIMO system.

In addition, after the receiving antenna array receives radio signals, when the radio signals propagate between the receiving antenna elements, a certain coupling (i.e. correlation) may be generated, and in the embodiment of the present disclosure, for establishing the channel model of MIMO system, the correlation of the radio signals propagating between the receiving antenna elements is considered to optimize the channel model of MIMO system, facilitating to an accurate analysis and test for channels of MIMO system, and therefore enabling an optimization of a design of MIMO system.

In the embodiment of the present disclosure, the signal simulation component may further include a beam controlling element configured to control waveform parameters of the excitation signal so as to perform a beam forming on the radio signal, for example, by adjusting weighting coefficients of the transmitting antenna elements in the transmitting antenna array to generate a beam with directivity.

As an example, the transmitting antenna elements in the transmitting antenna array and the receiving antenna elements in the receiving antenna array may be divided to form a transmitting antenna sub-array and a receiving antenna sub-array, respectively, and the beam forming may be performed on the excitation signal input to the transmitting antenna array, so that a radio signal transmitted by the transmitting antenna sub-array is directed to a specific user, and thus, an obvious array gain may be obtained.

In the embodiment of the present disclosure, any two adjacent columns of transmitting antenna elements in the transmitting antenna array may be staggered in a row direction.

In the embodiment of the present disclosure, any two adjacent columns of receiving antenna elements in the receiving antenna array may be staggered in the row direction.

That is to say, any two adjacent columns of transmitting antenna elements may be arranged in a staggered manner, and any two adjacent columns of receiving antenna elements may be arranged in a staggered manner, and Fig. 2 shows an example of arrangement manner. The antenna element 201 shown in Fig. 2 may be a transmitting antenna element or a receiving antenna element.

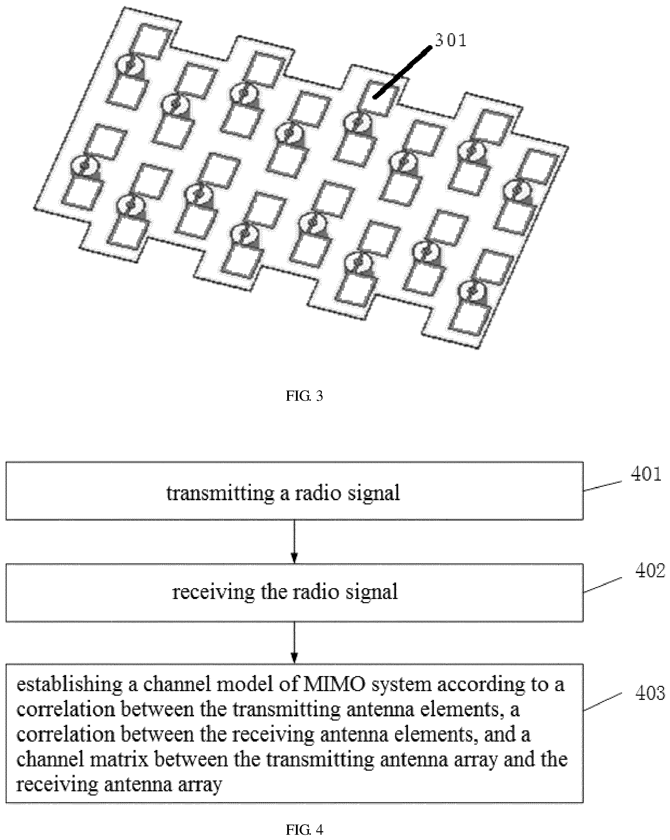

Fig. 3 shows a schematic diagram of an antenna array model of MIMO system established by HFSS software. As shown in Fig. 3, the antenna array model may be a transmitting antenna array model or a receiving antenna array model, and the antenna elements 301 may be transmitting antenna elements or receiving antenna elements.

An embodiment of the present disclosure further provides a channel modeling method of MIMO system, which employs the channel analysis model of MIMO system in the embodiment of the present disclosure. As shown in Fig. 4, the channel modeling method of MIMO system may include steps 401 through 403.

Step 401, transmitting a radio signal through the transmitting antenna array of the channel analysis model of MIMO system.

Step 402, receiving the radio signal through the receiving antenna array of the channel analysis model of MIMO system.

Step 403, establishing a channel model of MIMO system according to a correlation between the transmitting antenna elements in the transmitting antenna array of the channel analysis model of MIMO system, a correlation between the receiving antenna elements in the receiving antenna array of the channel analysis model of MIMO system, and a channel matrix between the transmitting antenna array of the channel analysis model of MIMO system and the receiving antenna array of the channel analysis model of MIMO system.

As can be seen from foregoing descriptions, the channel modeling method of MIMO system provided by the embodiment of the present disclosure employs the channel analysis model of MIMO system provided by the embodiment of the present disclosure, and when establishing the channel module of MIMO system, propagation characteristics of radio signals in the transmitting antenna array, a space, and the receiving antenna array are considered, so that the obtained channel model of MIMO system is much similar to an actual channel of MIMO system.

In the embodiment of the present disclosure, the correlation between the receiving antenna elements may include a matrix $T_r$ between input vectors and output vectors of the receiving antenna array, the correlation between the transmitting antenna elements may include a matrix $T_e$ between input vectors and output vectors of the transmitting antenna array, and the channel model of MIMO system may be expressed by $H'_p = T_r H_p T_e$, where $H_p$ represents a channel matrix associated with $p^{th}$ path from the transmitting antenna array to the receiving antenna array.

In the embodiment of the present disclosure, $H_p$ may be calculated by

$$H_p = a_p e^{-j2\pi d_p / \lambda_c} e_r(\theta_p) e_t^{H}(\varphi_p),$$ where $a_p$ represents an attenuation factor of the $p^{th}$ path, $d_p$ represents a distance between the transmitting antenna element and the receiving antenna element in the $p^{th}$ path, $\lambda_c$ represents a wavelength of a carrier wave, $e_r(\theta_p)$ represents a receiving antenna array response vector corresponding to an arrival angle $\theta_p$ of a radio signal reaching the receiving antenna array, which satisfies $\|e_r(\theta_p)\|_2 = 1$, and $e_t^{H}(\varphi_p)$ represents a transmitting antenna array response vector corresponding to a departure angle $e_t^{H}(\varphi_p)$ of a radio signal transmitted by the transmitting antenna array, which satisfies $\left\|e_t^{H}(\varphi_p)\right\|_2 = 1$.

An embodiment of the present disclosure further provides a computer-readable storage medium storing a computer program which, when executed by, for example, a computer, cause the computer to implement the channel modeling method of MIMO system according to the embodiment of the present disclosure.

By implementing the channel modeling method of MIMO system provided by the embodiment of the present disclosure, for establishing a channel model of MIMO system, propagation characteristics of radio signals in the transmitting antenna array, a space and the receiving antenna array are considered, so that the obtained channel model of MIMO system is much similar to an actual channel of MIMO system.

It should be noted that the "component" and "element" mentioned in the present disclosure may be implemented by software, hardware or a combination thereof, and the hardware may be, for example, a processor, an integrated circuit, or the like.

In addition, it should be noted that the "row" and "column" referred to in the present disclosure may be interchanged as necessary.

It is to be understood that the described embodiments of the present disclosure are merely illustrative and explanatory, and are not restrictive thereof. The embodiments and features of the embodiments of the present disclosure may be combined arbitrarily without conflict.

It will be apparent to those skilled in the art that various modifications and variations may be made in the embodiments of the present disclosure without departing from the scope of the present disclosure. Such modifications and variations are intended to be included within the scope of the present disclosure.

**Claims**

1. A channel analysis model of MIMO system, comprising an antenna component and an analysis component, wherein
the antenna component comprises a transmitting antenna array containing a plurality of transmitting antenna elements and a receiving antenna array containing a plurality of receiving antenna elements, and the analysis component is configured to establish a channel model of MIMO system according to a correlation between the transmitting antenna elements, a correlation between the receiving antenna elements and a channel matrix between the transmitting antenna array and the receiving antenna array.

2. The channel analysis model of claim 1, wherein the correlation between the receiving antenna elements comprises a matrix $T_r$ between input vectors and output vectors of the receiving antenna array, the correlation between the transmitting antenna elements comprises a matrix $T_e$ between input vectors and output vectors of the transmitting antenna array, and the channel model of MIMO system is expressed by

$$H'_p = T_r H_p T_e,$$

$H_p$ represents a channel matrix associated with $p^{th}$ path from the transmitting antenna array to the receiving antenna array.

3. The channel analysis model of claim 2, wherein $H_p$ is calculated by

$$H_p = a_p e^{-j2\pi d_p / \lambda_c} e_r(\theta_p) e_t^{H}(\varphi_p),$$ where $a_p$ represents an attenuation factor of the $p^{th}$ path, $d_p$ represents a distance between the transmitting antenna element and the receiving antenna element in the p$^{th}$ path, $\lambda_c$ represents a wavelength of a carrier wave, $e_r(\theta_p)$ represents a receiving antenna array response vector corresponding to an arrival angle $\theta_p$ of a radio signal reaching the receiving antenna array, which satisfies $\|e_r(\theta_p)\|_2 = 1$, and $e_t^{\text{H}}(\varphi_p)$ represents a transmitting antenna array response vector corresponding to a departure angle $e_t^{\text{H}}(\varphi_p)$ of a radio signal transmitted by the transmitting antenna array, which satisfies $\left\|e_t^{\text{H}}(\varphi_p)\right\|_2 = 1$.

4. The channel analysis model of claim 1, wherein the antenna component further comprises a printed circuit board, the transmitting antenna elements and the receiving antenna elements are patch antenna elements, and the patch antenna elements are disposed on the printed circuit board and arranged in order.

5. The channel analysis model of claim 1, further comprising a signal simulation component configured to transmit a radio signal through the transmitting antenna array,
   wherein the signal simulation component comprises an excitation signal generation element configured to feed power to the transmitting antenna array such that excitation signals connected to the transmitting antenna elements in the transmitting antenna array are independent of each other.

6. The channel analysis model of claim 5, wherein the signal simulation component further comprises a beam controlling element configured to control waveform parameters of the excitation signals for beam forming the radio signal.

7. The channel analysis model of claim 1, wherein any two adjacent columns of transmitting antenna elements in the transmitting antenna array are staggered in a row direction.

8. The channel analysis model of claim 1, wherein any two adjacent columns of receiving antenna elements in the receiving antenna array are staggered in a row direction.

9. A channel modeling method of MIMO system, which employs the channel analysis model of MIMO system of claim 1, comprising:
   establishing the channel model of MIMO system according to the correlation between the transmitting antenna elements in the transmitting antenna array of the channel analysis model of MIMO system, the correlation between the receiving antenna elements in the receiving antenna array of the channel analysis model of MIMO system, and the channel matrix between the transmitting antenna array of the channel analysis model of MIMO system and the receiving antenna array of the channel analysis model of MIMO system.

10. The method of claim 9, wherein the correlation between the receiving antenna elements comprises a matrix $T_r$ between input vectors and output vectors of the receiving antenna array, the correlation between the transmitting antenna elements comprises a matrix $T_e$ between input vectors and output vectors of the transmitting antenna array, and the channel model of MIMO system is expressed by

$$H_p^{'} = T_r H_p T_e,$$

$H_p$ represents a channel matrix associated with p$^{th}$ path from the transmitting antenna array to the receiving antenna array.

11. The method of claim 10, wherein $H_p$ is calculated by

$$H_p = a_p e^{-j 2\pi d_p / \lambda_c} e_r(\theta_p) e_t^{\text{H}}(\varphi_p), \text{ where } a_p$$

represents an attenuation factor of the p$^{th}$ path, $d_p$ represents a distance between the transmitting antenna element and the receiving antenna element in the p$^{th}$ path, $\lambda_c$ represents a wavelength of a carrier wave, $e_r(\theta_p)$ represents a receiving antenna array response vector corresponding to an arrival angle $\theta_p$ of a radio signal reaching the receiving antenna array, which satisfies $\|e_r(\theta_p)\|_2 = 1$, and $e_t^{\text{H}}(\varphi_p)$ represents a transmitting antenna array response vector corresponding to a departure angle $\varphi_p$ of a radio signal transmitted by the transmitting antenna array, which satisfies $\left\|e_t^{\text{H}}(\varphi_p)\right\|_2 = 1$.

12. A computer-readable storage medium storing a computer program which, when executed by a processor, cause the processor to implement the channel modeling method of MIMO system according to any of claims 9 through claim 11.

FIG. 1

FIG. 2

FIG. 3

| transmitting a radio signal | 401 |

| receiving the radio signal | 402 |

| establishing a channel model of MIMO system according to a correlation between the transmitting antenna elements, a correlation between the receiving antenna elements, and a channel matrix between the transmitting antenna array and the receiving antenna array | 403 |

FIG. 4

## INTERNATIONAL SEARCH REPORT

International application No.

**PCT/CN2018/100759**

### A. CLASSIFICATION OF SUBJECT MATTER

H04B 7/04(2017.01)i; H04L 1/06(2006.01)i; H04B 17/391(2015.01)i

According to International Patent Classification (IPC) or to both national classification and IPC

### B. FIELDS SEARCHED

Minimum documentation searched (classification system followed by classification symbols)

H04B; H04L; H04W; H04Q

Documentation searched other than minimum documentation to the extent that such documents are included in the fields searched

Electronic data base consulted during the international search (name of data base and, where practicable, search terms used)

CNABS; CNTXT; CNKI; VEN; JPTXT; WOTXT; EPTXT; USTXT; 3GPP: 信道, 模型, 分析, 载波波长, 接收, 发射, 响应矢量, 达角, 路径, 相关, 矩阵, 距离, 衰减, MIMO, channel, model, carrier, wavelength, transmit, receiv+, response, vector, direction, arrival, path, response, correlat+, matrix, distance, attenuation

### C. DOCUMENTS CONSIDERED TO BE RELEVANT

| Category* | Citation of document, with indication, where appropriate, of the relevant passages | Relevant to claim No. |
|---|---|---|
| X | CN 101789812 A (CHONGQING UNIVERSITY OF POSTS AND TELECOMMUNICATIONS) 28 July 2010 (2010-07-28) claims 1-7, and description, paragraphs [0069]-[0112] | 1, 2, 4-10, 12 |
| X | CN 103716264 A (NANJING UNIVERSITY OF INFORMATION SCIENCE & TECHNOLOGY) 09 April 2014 (2014-04-09) claims 1-3, and description, paragraphs [0074]-[0143] | 1, 2, 4-10, 12 |
| A | US 2005047517 A1 (REGENTS OF THE UNIVERSITY OF MINNESOTA) 03 March 2005 (2005-03-03) entire document | 1-12 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **31 October 2018** | **07 November 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2018/100759**

| Patent document cited in search report | | | Publication date (day/month/year) | Patent family member(s) | | | Publication date (day/month/year) |
|---|---|---|---|---|---|---|---|
| CN | 101789812 | A | 28 July 2010 | CN | 101789812 | B | 27 February 2013 |
| CN | 103716264 | A | 09 April 2014 | CN | 103716264 | B | 11 January 2017 |
| US | 2005047517 | A1 | 03 March 2005 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710701526